# DEMANDE DE BREVET EUROPEEN

(11) **EP 1 975 359 A1**
(43) Date de publication de la demande: **01.10.2008**
(21) Numéro de dépôt: 08151720.3
(22) Date de dépôt: 21.02.2008
(51) Int. Cl.: E05F 11/38, F16B 19/10

(54) **Dispositif de pré-montage d'une vis de fixation de la vitre d'un lève-vitre de véhicule**

(30) Priorité: 26.03.2007 FR 0754040
(71) Demandeur: PEUGEOT CITROËN AUTOMOBILES SA, 78140 Vélizy Villacoublay (FR)
(72) Inventeur: Barron, Gilles, 25420 Bart (FR)

(57) **Abrégé**

La vitre est fixée au curseur (2) de lève-vitre par l'intermédiaire d'une attache montée dans un orifice traversant de la vitre. La vis de fixation est destinée à traverser un cylindre de guidage (2b) du curseur 5é) et être vissée dans l'attache.

La vis de fixation (5), avant d'être vissée, est reliée au cylindre de guidage (2b) du curseur (2) par au moins une languette déformable (7a, 7b) et un cylindre de pré-maintien (6), de telle façon que la vis de fixation (5), pré-montée dans l'alésage central (6a) du cylindre de pré-maintien (6) soit ainsi intégrée au curseur (2) préalablement au montage, c'est-à-dire pré-montée.

- Véhicules automobiles. Lève-vitres de véhicules automobiles.

## Description

La présente invention concerne un dispositif de pré-montage d'une vis de fixation de la vitre d'un lève-vitre de véhicule. Elle peut s'appliquer plus généralement au pré-montage d'une vis de fixation d'une pièce en forme de plaque sur un support.

Un dispositif lève-vitre dans un véhicule comprend, de manière conventionnelle, au moins un rail de guidage solidaire d'une porte du véhicule à l'intérieur de celle-ci et au moins un curseur de support de la vitre qui peut coulisser sur le rail de guidage pour assurer la montée ou la descente de la vitre relativement à la porte.

De manière conventionnelle également, la vitre est fixée sur le curseur au moyen d'une attache spécifique en matière plastique et d'une vis destinée à être engagée dans un passage axial de l'attache. Le procédé de montage consiste alors à monter l'attache spécifique sur la vitre, au moyen d'un assemblage de type « assemblage par clip » sur un trou de la vitre par exemple, puis l'ensemble est monté sur la porte de véhicule, l'attache permettant d'assurer le maintien de la vitre sur le curseur pendant la durée requise pour saisir une vis, la placer en position sur l'attache et la visser pour solidariser la vitre et son curseur sur le rail de guidage.

Des dispositifs de montage et de fixation d'une vitre de véhicule sur un mécanisme lève-vitre sont déjà connus de l'art antérieur.

Ainsi, le document FR 2 716 244 décrit un rivet en matière plastique pour fixer une pièce en forme de plaque à un support à surface sensiblement plane. Ce rivet comporte une tige pourvue d'un passage axial creux et au moins deux fentes parallèles à son axe et ouvertes vers l'extrémité libre de la tige. Les segments de tige, ainsi formés, comportent, du côté extérieur, un segment en forme de rampe saillant en biais vers l'extérieur et vers le bas. Le passage axial se rétrécit vers l'extrémité libre de la tige. La tige comporte aussi une première collerette en forme de plateau qui présente, sur sa face inférieure, une arête d'étanchéité relativement vive appliquée contre la surface du support lorsque la tige est introduite dans une ouverture du support, une seconde collerette en forme de plateau disposée, par rapport à la première collerette, sur le côté opposé de la tige et à distance axiale de la première collerette, et une broche comportant, dans sa zone supérieure extrême, une nervure d'étanchéité annulaire qui coopère avec le passage axial pour créer l'étanchéité lorsque la broche est engagée dans le passage.

On connaît également, selon le document FR 06 51766, un dispositif formant lève-vitre de véhicule, qui comprend au moins un rail de guidage du déplacement de la vitre, au moins un curseur de support de la vitre pouvant coulisser sur le rail de guidage, une pièce interposée entre le curseur et la vitre et comportant un embout longitudinalement fendu traversant un trou de la vitre et définissant au moins deux pattes élastiquement écartables l'une de l'autre du côté de la vitre opposé à celui où se trouve le curseur par une vis de fixation traversant le curseur et l'embout de manière à fixer le curseur à la vitre. Le curseur peut coulisser sans jeu sur le rail de guidage et au moins un curseur comprend une boutonnière orientée suivant une direction horizontale ménageant pour le curseur un jeu suivant la direction horizontale relativement à un plot cylindrique creux traversant la boutonnière concentriquement à la vis et fixé transversalement à la vitre à l'opposé de l'embout de la pièce entre cette dernière et la tête de la vis, compensant de cette façon un défaut de parallélisme des rails de guidage.

Les pièces de fixation de ces dispositifs, connus de l'art antérieur, imposent de prévoir une logistique au bord de la ligne de montage automobile, de façon à rassembler les pièces avant leur saisie et leur mise en place sur la ligne de montage.

Le but de la présente invention est de fournir un dispositif de pré-montage d'une vis de fixation de la vitre d'un lève-vitre de véhicule, qui permette de supprimer l'opération de récupération, de saisie et de mise en position de la vis de fixation sur le curseur avant son vissage.

Un autre but de la présente invention est de fournir un tel dispositif de pré-montage, qui permette un gain en qualité et en temps au montage de la vitre sur le lève-vitre.

Un autre but de la présente invention est de fournir un tel dispositif de pré-montage, qui soit de conception simple, de réalisation aisée, qui soit robuste, fiable et économique.

Pour parvenir à ces buts, la présente invention propose un dispositif de pré-montage d'une vis de fixation de la vitre d'un lève-vitre de véhicule, dans lequel la vitre est fixée au curseur du lève-vitre par l'intermédiaire d'une attache montée dans un orifice traversant de la vitre et la vis de fixation est destinée à être vissée dans le curseur et un passage axial de l'attache. Dans ce nouveau dispositif, la vis de fixation, avant d'être vissée, est reliée au curseur par au moins une languette déformable, de telle sorte que la vis de fixation est intégrée au curseur préalablement au montage, c'est-à-dire pré-montée.

La (ou les) languette(s) déformable(s) est (sont) reliée(s) à la vis de fixation par l'intermédiaire d'un cylindre de pré-maintien, dans l'alésage duquel est pré-montée la vis de fixation.

La (ou les) languette(s) déformable(s) est (sont) reliée(s) au curseur par l'intermédiaire d'un cylindre de guidage, en saillie du curseur, coaxial au passage axial de l'attache.

Selon un mode préféré de réalisation de l'invention, le cylindre de guidage présente un alésage central de diamètre très légèrement supérieur au diamètre externe du cylindre de pré-maintien, et la longueur axiale de l'alésage central du cylindre de guidage est légèrement supérieure à la longueur axiale du cylindre de pré-maintien, de façon que le cylindre de pré-maintien puisse se loger entièrement dans l'alésage central du cylindre de guidage lors du vissage de la vis de fixation.

De préférence, la vis de fixation est reliée au curseur par deux languettes déformables situées symétriquement par rapport à l'axe de la vis de fixation.

Selon le mode préféré de réalisation de l'invention également, le cylindre de guidage présente des rainures radiales qui forment des logements pour les languettes déformées après vissage de la vis de fixation.

De préférence, le corps principal du curseur, le cylindre de guidage, les languettes déformables et le cylindre de pré-maintien sont « monoblocs ».

De préférence également, le corps principal du curseur, le cylindre de guidage, les languettes déformables et le cylindre de pré-maintien sont en matière plastique, et sont obtenus par une seule opération de moulage utilisant un moule unique.

De manière avantageuse, au moins une zone de fragilité est intégrée dans chaque languette, de façon à mieux maîtriser la déformation par pliage desdites languettes quand on visse la vis de fixation.

Au moins une zone de fragilité est située, de préférence, sensiblement au milieu de la longueur de chaque languette déformable.

Les languettes déformables sont reliées au cylindre de guidage, de préférence sur des épaulements situés en partie inférieure des rainures radiales.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 représente les moyens de fixation conventionnels d'une vitre sur un rail de guidage de lève-vitre de véhicule,
- la figure 2A et 2B sont des vues frontale et arrière, respectivement, de l'attache de vitre d'un lève-vitre de véhicule,
- Les figures 3A et 3B sont des vues en coupe latérale et frontale, respectivement, des pièces de l'assemblage d'une vitre sur le curseur d'un lève-vitre, avant fixation, selon l'art antérieur,
- les figures 4A et 4B sont des vues en coupe latérale et frontale, respectivement, des pièces de l'assemblage d'une vitre sur le curseur d'un lève-vitre, après fixation, selon l'art antérieur,
- les figures 5A à 5C sont des vues en coupe latérale, frontale et de dessus, respectivement, des pièces de l'assemblage d'une vitre sur le curseur d'un lève-vitre, avant vissage de la vis de fixation de l'ensemble, selon la présente invention,
- les figures 6A à 6C sont des vues en coupe latérale, frontale et de dessus, respectivement, des pièces de l'assemblage des figures 5A à 5C, après vissage de la vis de fixation de l'ensemble,
- la figure 7 est une vue détaillée, en perspective, du dispositif de pré-montage de la vis de fixation de vitre des figures 5A à 5C et 6A à 6C, avant le vissage de la vis de fixation, et
- la figure 8 est une vue détaillée, en perspective, du dispositif de pré-montage de la figure 7, après le vissage de la vis de fixation.

Un mécanisme de lève-vitre de véhicule, de type conventionnel, comprend deux rails de guidage solidaires d'une porte du véhicule, situées à l'intérieur de celle-ci, et deux curseurs de support de la vitre de la porte qui peuvent coulisser respectivement sur les deux rails de guidage, de façon à assurer la montée ou la descente de la vitre relativement à la porte.

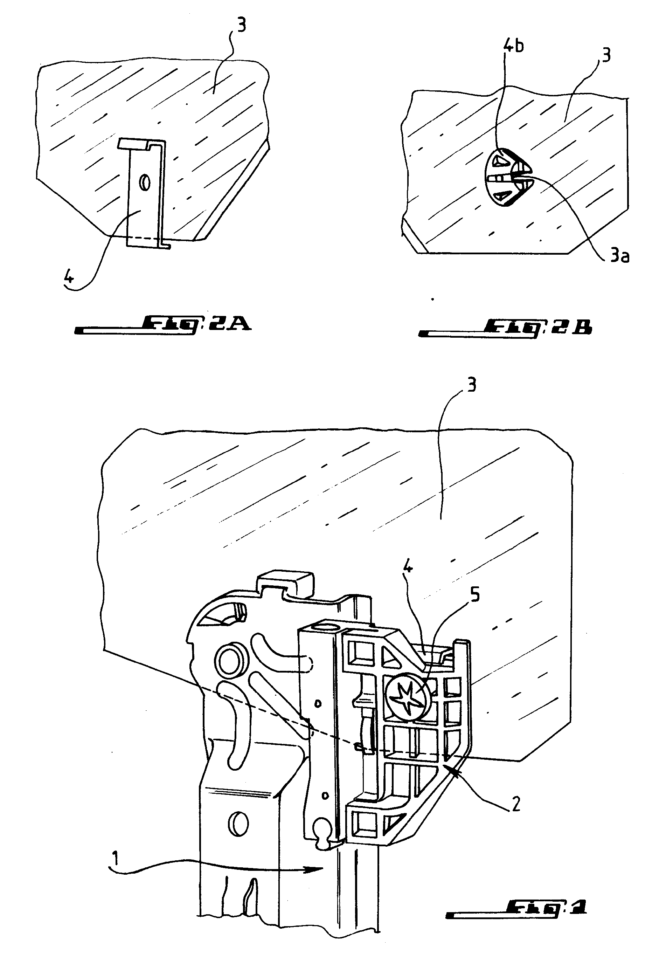

On a représenté, sur la figure 1, un rail de guidage 1, son curseur correspondant 2 coulissant sur le rail 1, et la vitre 3 reliée au curseur 2 par une attache spécifique 4. La vitre 3 est fixée sur le curseur 2 au moyen d'une vis de fixation 5, qui traverse l'attache 4.

L'attache 4 est représentée seule, positionnée sur la vitre 3, sur les figures 2A et 2B, qui sont des vues frontale et arrière, respectivement, de l'attache 4 de vitre.

L'attache 4 est assemblée à la vitre 3 par insertion d'une partie en forme de « clip », référencée 4b, dans un orifice 3a traversant de la vitre 3, comme représenté sur le dessin de la figure 2B.

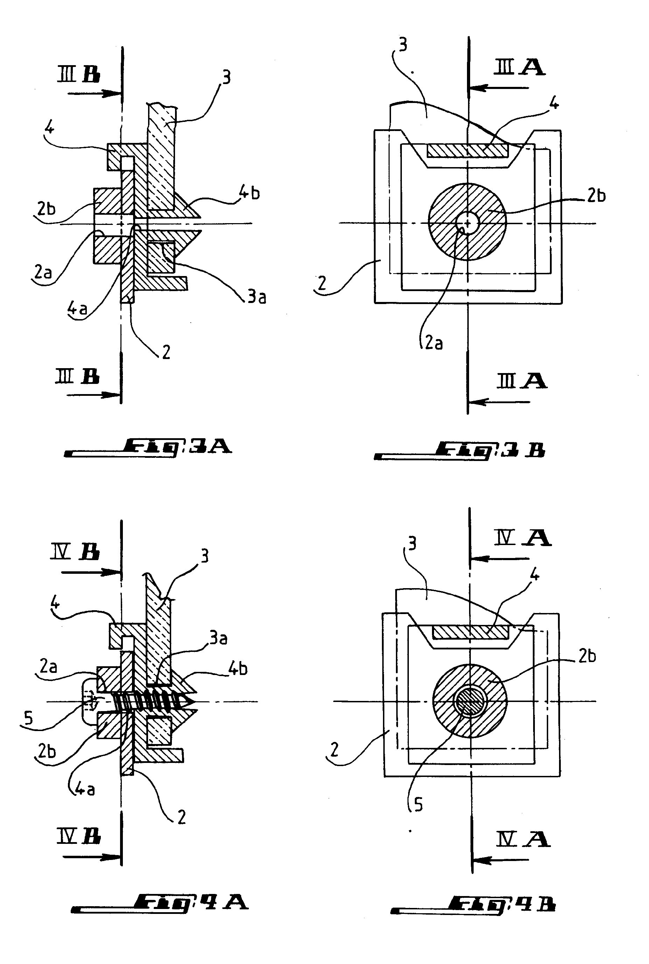

Un exemple de fixation de la vitre 3 sur le curseur 2 d'un mécanisme de lève-vitre de véhicule est représenté sur les figures 3A, 3B et 4A, 4B. L'attache 4 traverse l'orifice 3a de la vitre 3 et s'accroche à la vitre 3 par la partie 4b de l'attache. La forme et la fonction de cette partie 4b de l'attache 4 sont celles d'un « clip » de retenue engagé dans l'orifice 3a de la vitre 3. L'attache 4 présente un orifice traversant 4a, qui traverse sa partie principale plane et sa partie de clip 4b logée dans la vitre 3 et en prolongement de la partie principale plane. Le curseur 2 présente une partie cylindrique 2b en saillie de sa surface opposée à la vitre 3. Cette partie cylindrique, qui fait partie intégrante du curseur 2, est appelée « cylindre de guidage 2b » et permet le guidage du moyen de fixation (vis de fixation) de l'ensemble. L'alésage central 2a du cylindre de guidage 2b est destiné à recevoir le moyen de fixation représenté sur les figures 4A et 4B.

Comme représenté sur les figures 4A et 4B, le moyen de fixation est une vis de fixation, référencée 5, qui est montée dans l'alésage central 2a du cylindre de guidage 2b du curseur 2 et dans l'orifice traversant 4a de l'attache 4, l'orifice 4a étant coaxial à l'alésage central 2a de la partie centrale 2b du curseur 2.

L'opérateur de montage doit solidariser l'ensemble à l'aide de la vis de fixation 5.

Le dispositif de la présente invention apporte une solution technique au pré-montage de la vis 5 : il permet d'intégrer au curseur 2 de lève-vitre la vis de fixation 5, laquelle est, par conséquent, livrée avec le curseur 2 par le fournisseur et n'a plus besoin de se trouver en bord de ligne de montage dans un bac de vis, par exemple.

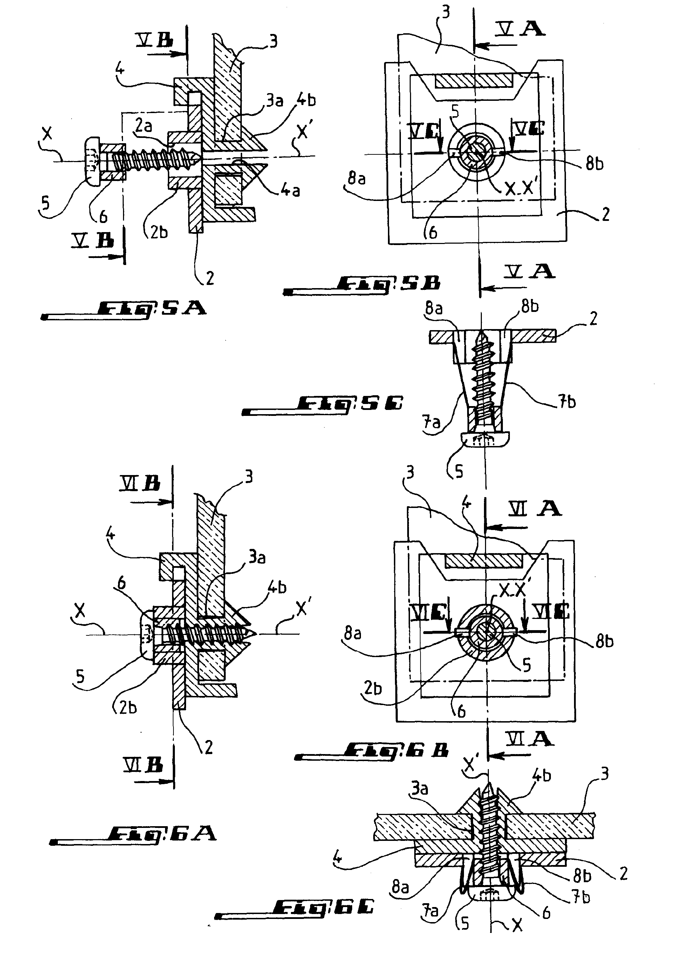

On a représenté la solution technique de la présente invention sur les figures 5A à 5C, et 6A à 6C. Dans ces figures, les éléments et pièces qui sont identiques aux éléments et pièces des figures précédentes sont désignés par des références numériques identiques.

L'attache 4 traverse l'orifice 3a de la vitre 3 et s'accroche à la vitre 3 par son prolongement 4b en forme de « clip » de retenue. L'attache 4 présente un orifice traversant 4a, qui traverse sa partie principale plane et sa partie de clip 4b logée dans la vitre 3. Le cylindre de guidage 2b permet le guidage du moyen de fixation de l'ensemble (vis de fixation). L'alésage central 2a du cylindre de guidage 2b est destiné à recevoir une vis de fixation 5, qui est vissée dans l'orifice traversant 4a de l'attache 4, l'orifice 4a étant coaxial à l'alésage central 2a du cylindre de guidage 2b du curseur 2 et confondu avec l'axe XX' de l'ensemble de fixation.

La vis de fixation 5 est solidaire du curseur 2 par l'intermédiaire d'un cylindre de pré-maintien 6, traversé par la vis de fixation 5, et relié au cylindre de guidage 2b du curseur 2 par deux languettes 7a et 7b (voir figure 5C).

Le corps principal du curseur 2, le cylindre de guidage 2b, les languettes 7a et 7b et le cylindre de pré-maintien 6 sont, de préférence, « monoblocs » et issus du même moule de fabrication dans le cas où le curseur 2 est réalisé par moulage par injection de matière plastique.

De cette manière, la vis de fixation 5 est pré-montée sur le curseur 2, comme représenté sur les figures 5A à 5C, dans lesquelles la vis de fixation 5 traverse le cylindre de pré-maintien 6 et est légèrement engagée par son extrémité filetée dans l'alésage central 2a du cylindre de guidage 2b du curseur 2.

En référence aux figures 6A à 6C, la vis de fixation 5 est vissée dans l'orifice central 4a, d'axe XX', de l'attache 4. La tête de la vis de fixation 5 vient en appui contre le cylindre de guidage 2b du curseur 2, tandis que le cylindre de pré-maintien 6, de diamètre externe très légèrement inférieur au diamètre interne de l'alésage 2a du cylindre de guidage 2b, vient se loger entièrement dans ledit alésage 2a du cylindre de guidage 2b du curseur 2. A cette fin, la longueur axiale du cylindre de pré-maintien 6 est inférieure à la longueur axiale de l'alésage 2a du cylindre de guidage 2b du curseur 2.

Le vissage de la vis de fixation 5 pré-montée provoque la déformation par pliage des languettes 7a et 7b, qui viennent se loger dans des rainures radiales 8a et 8b aménagées dans le cylindre de guidage 2b. A cette fin, la position angulaire des languettes 7a et 7b correspond à celle des rainures 8a et 8b, de manière que les languettes 7a, 7b se trouvent face aux rainures 8a, 8b, respectivement, et puissent se loger à l'intérieur de ces dernières.

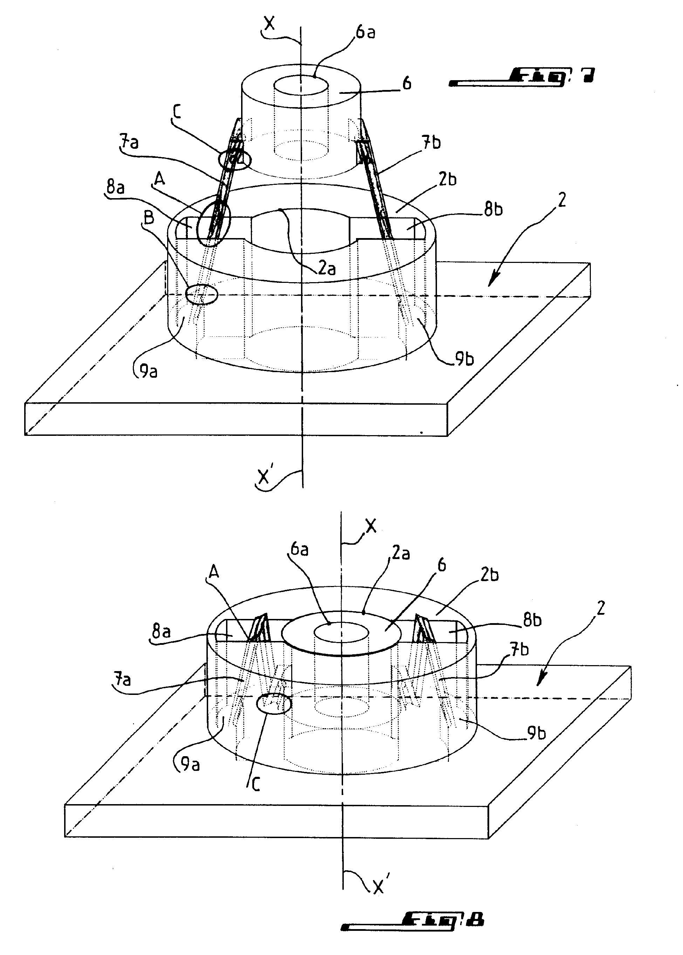

Le corps principal du curseur 2, le cylindre de guidage 2b, les languettes 7a et 7b et le cylindre de pré-maintien 6 sont représentés avec plus de détails sur la figure 7, en position de pré-montage avant le vissage de la vis de fixation 5 non représentée. Dans cette position de pré-montage, la vis de fixation 5 traverse l'alésage 6a du cylindre de pré-maintien 6.

Les languettes déformables 7a, 7b prennent appui sur des épaulements 9a, 9b, respectivement, aménagés en partie inférieure des rainures radiales 8a, 8b, respectivement.

Des zones de fragilité mécanique des languettes 7a, 7b sont prévues pour mieux maîtriser la façon dont les languettes se déforment par pliage lorsqu'on visse la vis de fixation 5 dans le clip 4b de l'attache 4.

Ces zones de fragilité peuvent être, par exemple, des zones dans lesquelles la section de la languette est réduite. Tout autre moyen équivalent, connu en soi, de réduction de la résistance mécanique au pliage peut être employé pour la réalisation des zones de fragilité des languettes.

Une zone de fragilité, illustrée par la référence A, peut être avantageusement intégrée au milieu de chaque languette 7a, 7b. D'autres zones de fragilité, telles les zones illustrées par les références B et C, peuvent également être intégrées pour parfaire la maîtrise de la déformation des languettes 7a, 7b.

Le corps principal du curseur 2, le cylindre de guidage 2a, les languettes 7a et 7b et le cylindre de pré-maintien 6 sont représentés avec détails également sur la figure 8, après le vissage de la vis de fixation, c'est-à-dire après déformation par pliage des languettes déformables 7a, 7b.

Les languettes 7a, 7b, déformées par pliage, autour d'une ou plusieurs zones de fragilité, viennent se loger dans les rainures radiales correspondantes 8a, 8b, respectivement, aménagées dans le cylindre de guidage 2b du curseur 2.

Comme déjà mentionné précédemment, lorsque la vis de fixation a été vissée, le cylindre de pré-maintien 6 est logé entièrement dans l'alésage central 2a du cylindre de guidage 2b du curseur 2, le cylindre de pré-maintien 6 venant se loger dans le cylindre de guidage 2b en se déplaçant selon l'axe XX' du dispositif.

L'invention décrite ci-dessus présente de nombreux avantages, parmi lesquels les avantages suivants :
- la vis de fixation de la vitre de lève-vitre est intégrée au curseur livré par le fournisseur de pièces, et n'a pas plus besoin d'être en bord de ligne de montage, d'où il résulte un gain de place en bord de ligne et la disparition des bacs à vis des solutions antérieures de montage des lève-vitres,
- le temps de montage est diminué, parce qu'il n'y a plus besoin de faire des allers et retours entre le véhicule en cours de montage et un bac de rangement des vis, et aussi parce que la vis est déjà pré-positionnée, et par conséquent, prête à être vissée,
- la qualité est améliorée parce qu'il n'y a plus de risque de faire tomber une vis de fixation en fond de caisson de porte avec le risque supplémentaire de ne pas pouvoir la récupérer entraînant alors la production d'un bruit parasite au roulage et à la manoeuvre de la porte,
- la qualité est également améliorée pour la raison qu'il n'y a plus aucun risque de monter la mauvaise vis lorsqu'on monte les vitres de différents modèles de véhicules sur un même poste de montage.

Bien entendu, la présente invention n'est pas limitée au mode de réalisation décrit et représenté ci-dessus à titre d'exemple ; d'autres modes de réalisation peuvent être conçus par l'homme de métier sans sortir du cadre et de la portée de la présente invention.

## Revendications

1. Dispositif de pré-montage d'une vis de fixation (5) de la vitre (3) d'un lève-vitre de véhicule, la vitre (3) étant fixée au curseur (2) du lève-vitre par l'intermédiaire d'une attache (4) montée dans un orifice traversant (3a) de la vitre (3) et la vis de fixation (5) étant destinée à être vissée dans le curseur (2) et un passage axial (4a) de l'attache (4), **caractérisé en ce que** la vis de fixation (5), avant d'être vissée, est reliée au curseur (2) par au moins une languette déformable (7a, 7b), de telle sorte que la vis de fixation (5) est intégrée au curseur (2) préalablement au montage.

2. Dispositif selon la revendication 1, **caractérisé en ce que** ladite languette déformable au moins (7a, 7b) est reliée à la vis de fixation (5) par l'intermédiaire d'un cylindre de pré-maintien (6), dans l'alésage duquel est pré-montée la vis de fixation (5).

3. Dispositif selon l'une quelconque des revendications 1 et 2, **caractérisé en ce que** ladite languette déformable au moins (7a, 7b) est reliée au curseur (2) par l'intermédiaire d'un cylindre de guidage (2b), en saillie du curseur (2), coaxial au passage axial (4a) de l'attache (4).

4. Dispositif selon la revendication 3, **caractérisé en ce que** le cylindre de guidage (2b) présente un alésage central (2a) de diamètre très légèrement supérieur au diamètre externe du cylindre de pré-maintien (6), et **en ce que** la longueur axiale de l'alésage central (2a) du cylindre de guidage (2b) est légèrement supérieure à la longueur axiale du cylindre de pré-maintien (6), de façon que le cylindre de pré-maintien (6) puisse se loger entièrement dans l'alésage central (2a) du cylindre de guidage (2b) lors du vissage de la vis de fixation (5).

5. Dispositif selon l'une quelconque des revendications 1 à 4, **caractérisé en ce que** la vis de fixation (5) est reliée au curseur (2) par deux languettes déformables (7a, 7b) situées symétriquement par rapport à l'axe (XX') de la vis de fixation (5).

6. Dispositif selon la revendication 5, **caractérisé en ce que** le cylindre de guidage (2b) présente des rainures radiales (8a, 8b) qui forment des logements pour les languettes (7a, 7b) déformées après vissage de la vis de fixation (5) .

7. Dispositif selon l'une quelconque des revendications 1 à 6, **caractérisé en ce que** le corps principal du curseur (2), le cylindre de guidage (2b), les languettes déformables (7a, 7b) et le cylindre de pré-maintien (6) sont monoblocs.

8. Dispositif selon l'une quelconque des revendications 1 à 7, **caractérisé en ce que** le corps principal du curseur (2), le cylindre de guidage (2b), les languettes déformables (7a, 7b) et le cylindre de pré-maintien (6) sont en matière plastique, et obtenus par une seule opération de moulage utilisant un moule unique.

9. Dispositif selon l'une quelconque des revendications 1 à 8, **caractérisé en ce qu'**au moins une zone de fragilité (A, B, C) est intégrée dans chaque languette (7a, 7b), de façon à mieux maîtriser la déformation par pliage desdites languettes quand on visse la vis de fixation (5).

10. Dispositif selon la revendication 9, **caractérisé en ce qu'**au moins une zone de fragilité (A) est située sensiblement au milieu de la longueur de chaque languette déformable (7a, 7b).

11. Dispositif selon l'une quelconque des revendications 6 à 10, **caractérisé en ce que** les languettes déformables (7a, 7b) sont reliées au cylindre de guidage sur des épaulements (9a, 9b) situés en partie inférieure des rainures radiales (8a, 8b).
